# EUROPÄISCHE PATENTSCHRIFT

(11) **EP 2 692 688 B1**
(45) Veröffentlichungstag und Bekanntmachung des Hinweises auf die Patenterteilung: **27.05.2015**
(21) Anmeldenummer: 13175015.0
(22) Anmeldetag: 04.07.2013
(51) Int. Cl.: B66F 9/075, B66F 17/00, B60Q 1/36, B65G 1/06, G08G 1/09

(54) **Fahrassistenzvorrichtung für ein Flurförderzeug sowie Flurförderzeug**
Driving aid device for an industrial truck and industrial truck
Dispositif d'assistance à la conduite pour un chariot de manutention et chariot de manutention

(30) Priorität: 31.07.2012 DE 102012106990
(43) Veröffentlichungstag der Anmeldung: 05.02.2014
(73) Patentinhaber: Linde Material Handling GmbH, 63743 Aschaffenburg (DE)
(72) Erfinder: Adami, Peter, 63849 Leidersbach (DE)
(74) Vertreter: Geirhos, Johann

(56) Entgegenhaltungen:
- DE-A1-102006 002 960
- DE-A1-102007 063 226

## Beschreibung

Die Erfindung betrifft eine Fahrerassistenzvorrichtung für ein Flurförderzeug sowie ein Flurförderzeug. Insbesondere betrifft die Erfindung eine Fahrerassistenzvorrichtung für ein Flurförderzeug, die an dem Flurförderzeug angeordnet einen Lichteffekt auf die Fahrbahn projizieren kann.

Bei verschiedenen Fahrzeugen, z.B. Bussen, Wohnmobilen und Lastkraftwagen, ist bekannt, diese mit einem Kamerasystem auszustatten, um dem Fahrer beim Rangieren eine Übersicht zur Verfügung zu stellen, die über Spiegel oder unter direkter Sicht nur schwer möglich ist. Auch bei Flurförderzeugen, insbesondere Gegengewichtsgabelstaplern ist der Einsatz von Kamerasystemen bekannt. Aus der DE 10 2007 063 226 A1 ist bekannt, eine mögliche Fahrspur in Abhängigkeit eines Lenkwinkels in die Anzeige eines Kamerabildes einzublenden, um anzuzeigen, ob bei dem eingeschlagenen Lenkwinkel ein mögliches Hindernis sich in dem Fahrweg befindet.

Nachteilig an diesem Stand der Technik ist, dass die Anzeige des Kamerabildes keinen räumlichen Eindruck und nur eine deutlich verkleinerte Darstellung des Fahrweges gewährt und daher beispielsweise beim Anfahren einer Lagerposition nur bedingt hilfreich ist.

Insbesondere bei der Arbeit mit Flurförderzeugen tritt sehr häufig die typische Problemstellung auf, dass eine Lagerposition für eine Last zunächst über eine weitere Strecke angefahren wird und unmittelbar vor der Lagerposition das Flurförderzeug um 90°gedreht werden muss, um ein Lastaufnahmemittel, insbesondere eine Lastgabel, auf die Lagerposition oder eine dort gelagerte Last auszurichten. Der häufigste Fall hierfür ist, wenn mit Gegengewichtsgabelstaplern oder Schubmaststaplern das Ein- und Auslagern von Transportlasten in Regalanlagen erfolgt. Hierbei fährt der Fahrer mit dem Flurförderzeug entlang der Regalgasse bis unmittelbar vor die angesteuerte Lagerposition und muss sodann das Flurförderzeug um 90° gegenüber der bisherigen Fahrtrichtung drehen, um die Lastgabel auf die Lagerposition bzw. die Last auszurichten. Bei dieser Drehung muss der Fahrer es aufgrund der eigenen Routine und Erfahrung schaffen, die Gabelzinken der Lastgabel so auszurichten, dass diese in die entsprechenden Öffnungen der Palette, auf der die Last in der Lagerposition gelagert ist, eingeführt werden können. Wenn es zu einem Versatz gegenüber diesen Öffnungen kommt und Korrekturmöglichkeiten, beispielsweise über eine Seitenschiebereinrichtung für die Lastgabel nicht ausreichen, so muss eine Korrektur der Ausrichtung durch eventuell mehrfaches Rangieren erreicht werden. Dieses Nachbessern kostet jedoch Zeit und lässt sich bisher nur durch entsprechende Fahrpraxis und Erfahrung der Fahrer minimieren und vermeiden.

Aus der DE 10 2006 002 960 A1 ist ein Flurförderzeug mit einer optischen Warneinrichtung bekannt, bei dem ein in Fahrtrichtung weisender Lichteffekt auf die Fahrbahn projiziert wird, um Personen in der Umgebung vor dem herannahenden Flurförderzeug zu warnen.

Dieser Stand der Technik dient jedoch allein zur Warnung vor einem herannahenden Flurförderzeug und bietet keine Hilfestellung beim Rangieren und Anfahren einer Lagerposition.

Der Erfindung liegt daher die Aufgabe zu Grunde, eine Fahrerassistenzvorrichtung für ein Flurförderzeug sowie ein Flurförderzeug und ein System zur Verfügung zu stellen, mit denen es möglich ist, leichter und genauer eine Lagerposition durch eine Kurvenfahrt anzufahren und die oben beschriebenen Nachteile zu vermeiden.

Diese Aufgabe wird durch eine Fahrerassistenzvorrichtung mit den Merkmalen des Patentanspruchs 1, ein Flurförderzeug mit den Merkmalen des Patentanspruchs 5 und ein System mit den Merkmalen des Patentanspruchs 14 gelöst. Vorteilhafte Weiterbildungen und Ausgestaltungen der Erfindung sind in den Unteransprüchen angegeben.

Die Aufgabe wird gelöst durch eine Fahrerassistenzvorrichtung für ein eine Lasthandhabungsvorrichtung aufweisendes Flurförderzeug, die an dem Flurförderzeug angeordnet einen Lichteffekt auf die Fahrbahn projizieren kann, wobei der Lichteffekt eine Positionsmarkierung der Lasthandhabungsvorrichtung auf der Fahrbahn zu einem Lenkeinschlag markieren kann, die von der Lasthandhabungsvorrichtung nach einer Kurvenfahrt des Flurförderzeugs um einen festgelegten Kurvenbahnwinkel erreicht wird.

Abhängig von einem Lenkeinschlag durchfährt das Flurförderzeug Kurvenbahnen mit unterschiedlich großen Radien. Durch die Positionsmarkierung wird die Stelle angegeben, an der sich die Lasthandhabungsvorrichtung nach Durchfahren eines festgelegten Kurvenbahnwinkels auf der Kurvenbahn zu einem durch den Lenkeinschlag festgelegten Radius befinden wird. Beispielsweise bedeutet das Durchfahren eines Kurvenbahnwinkels von 90°, dass sich das Flurförderzeug in Bezug auf seine Längsachse um 90° dreht und einen Viertelkreis auf der Kurvenbahn durchfährt. Wenn beispielsweise ein Fahrer mit einem Flurförderzeug, das mit der Fahrerassistenzvorrichtung versehen ist, den Bereich einer Lagerposition in einer Regalgasse anfährt, so muss für das Aufnehmen einer in dem Regal gelagerten Palette das Flurförderzeug um einen Kurvenbahnwinkel von 90° quer zur Regalgasse gedreht werden. Durch die erfindungsgemäße Fahrerassistenzvorrichtung wird für den Fahrer leicht optisch erfassbar dargestellt, wo sich dann die Lasthandhabungsvorrichtung, im Fall einer auf einer Palette gelagerten Last eine Lastgabel, befinden wird. Vor dem Beginn der Kurvenfahrt kann daher der Fahrer das Flurförderzeug so ausrichten, dass nach der Kurvenfahrt die Lastgabel in der richtigen Stellung zur Aufnahme der Palette sich befindet und keine weiteren Korrekturen erforderlich bzw. geringe Korrekturen durch einen gegebenenfalls vorhandenen Seitenschiebereinrichtung der Lasthandhabungsvorrichtung ausreichend sind. Dabei ist es denkbar, die Fahrerassistenzvorrichtung auf einen festen Lenkeinschlag, etwa den maximalen Lenkeinschlag einzustellen. In diesem Fall muss das Flurförderzeug so lange entlang dem Regal bewegt werden, bis die Positionsmarkierung an der richtigen Stelle ist, der maximale Lenkeinschlag vorgenommen werden und in der nachfolgenden Kurvenfahrt gelangt die Lasthandhabungsvorrichtung genau auf diese Position. Alternativ kann auch die Positionsmarkierung zu einem momentan anliegenden Lenkeinschlag angezeigt werden. In diesem Fall kann die Ausrichtung auch durch eine Veränderung des Lenkeinschlags neben dem Verfahren des Flurförderzeugs erfolgen. Dabei muss ein den momentanen Lenkeinschlag wiedergebendes Signal an die Fahrerassistenzvorrichtung übertragen werden. Dabei kann die Erfassung des Lenkeinschlags durch in dem Stand der Technik hinreichend bekannte Verfahren und Vorrichtungen erfolgen, insbesondere Sensoren. Durch die erfindungsgemäße Fahrerassistenzvorrichtung sind keine Korrekturen der Ausrichtung des Flurförderzeugs quer zu einer aufzunehmenden Last erforderlich und es ergibt sich eine erhebliche Zeitersparnis. Die Fahrerassistenzvorrichtung kann als kompakte eigenständige Vorrichtung ausgeführt sein und insbesondere, wenn der maximale Lenkeinschlag als fester Lenkeinschlag genutzt wird, leicht an Flurförderzeugen nachgerüstet werden. Insbesondere können auch Fahrer mit noch wenig Fahrpraxis und Routine mit der erfindungsgemäßen Fahrerassistenzvorrichtung zeitsparend Lagerpositionen anfahren. Ein häufiger Anwendungsfall sind Kurvenbahnwinkel von 90°, wenn eine Lagerposition in einer Reihe von Lagerplätzen angefahren wird und dann ein Ausrichten auf diese Lagerposition erfolgt. Die Erfindung kann aber auch für alle anderen denkbaren Kurvenbahnwinkel angewandt werden, die sich aufgrund der Verhältnisse und der Einsatzart in einem Lager ergeben können.

Vorteilhaft besteht der Lichteffekt aus einer die Orientierung der Lasthandhabungsvorrichtung wiedergebenden Positionsmarkierung.

Insbesondere durch eine Kenntlichmachung einer winkelmäßigen Ausrichtung, wie etwa durch den Gabelzinken entsprechende Linien, kann leicht beurteilt werden, ob sich die Lastaufnahmevorrichtung nach der Kurvenfahrt in der richtigen Position befinden wird.

In einer vorteilhaften Ausgestaltung der Erfindung gibt die Positionsmarkierung eine schematische Umrisslinie der Lasthandhabungsvorrichtung wieder.

Durch die Wiedergabe einer schematischen Umrisslinie können insbesondere auch verschiedene, gegebenenfalls an demselben Flurförderzeug austauschbar verwendbare Lasthandhabungsvorrichtungen kenntlich gemacht werden. Beispielsweise können dadurch eine Lastgabel und eine Papierrollenklammer, eine Ballenklammer oder ein sonstiges Anbaugerät zur Lasthandhabung unterschieden werden und ein Fahrer kann jeweils erkennen, ob die Ausrichtung für die angefahrene Lagerposition korrekt ist.

Der Lichteffekt kann von einem gebündelten Lichtstrahl einer entsprechenden Lichtquelle erzeugt werden.

Der Lichteffekt kann durch einen Laser erzeugt werden.

Laser stehen kostengünstig zur Verfügung und ermöglichen eine gut sichtbare Wiedergabe eines Linienbildes auf der Fahrbahn, etwa in Form des Umrisses der Lasthandhabungsvorrichtung.

Die Aufgabe wird auch gelöst durch ein Flurförderzeug mit einer Lasthandhabungsvorrichtung und einer zuvor beschriebenen Fahrerassistenzvorrichtung, bei dem der Lichteffekt eine Positionsmarkierung der Lasthandhabungsvorrichtung auf der Fahrbahn zu einem Lenkeinschlag markieren kann, die von der Lasthandhabungsvorrichtung nach einer Kurvenfahrt des Flurförderzeugs um einen festgelegten Kurvenbahnwinkel erreicht wird.

Das Flurförderzeug mit der Fahrerassistenzvorrichtung weist die bereits zuvor geschilderten Vorteile auf. Die Positionsmarkierung kann dabei gleichzeitig auf beiden Seiten des Flurförderzeugs projiziert werden oder es kann von dem Fahrer gewählt werden, auf welcher Seite eine Positionsmarkierung projiziert werden soll.

In günstiger Ausgestaltung der Erfindung kann die Positionsmarkierung für den maximalen Lenkeinschlag angezeigt werden.

Dies ermöglicht eine besonders einfache und kostengünstige Ausführung und benötigt kein Signal aus der Fahrzeugsteuerung des Flurförderzeugs, wie etwa einen Lenkeinschlagwinkel.

In einer erfindungsgemäßen Weiterbildung kann die Positionsmarkierung für den momentanen Lenkeinschlag angezeigt werden.

Dadurch kann ein Nachführen der Positionsmarkierung in Abhängigkeit von dem momentanen Lenkwinkel erzielt werden und es kann eine Korrektur der Ausrichtung vor der Kurvenfahrt zusätzlich zu einem Vor- oder Zurücksetzen des Flurförderzeugs mittels des Fahrantriebs auch durch eine Anpassung des Lenkeinschlags, beispielsweise an einem Lenkrad, erfolgen. Dabei ist es denkbar, neben der Positionsmarkierung für den momentanen Lenkeinschlag auch zusätzlich die Positionsmarkierung für einen maximalen Lenkeinschlag zu markieren.

Sofern eine Seitenschiebereinrichtung für die Lasthandhabungsvorrichtung vorgesehen ist, kann gemäß einer Weiterbildung die Positionsmarkierung in Abhängigkeit von der Stellung der Seitenschiebereinrichtung nachgeführt werden. Dadurch wird eine automatische Nachführung Positionsmarkierung bei einer Veränderung der Seitenschubposition der Lasthandhabungsvorrichtung bei einer Betätigung der Seitenschiebereinrichtung erzielt.

Vorteilhaft beträgt der festgelegten Kurvenbahnwinkel 90°.

Dies entspricht dem häufigsten Anwendungsfall, wenn mit einem Flurförderzeug in einer Regalgasse eine Lagerposition angefahren wird und innerhalb der Regalgasse das Flurförderzeug zur Aufnahme einer Last oder zum Absetzen einer Last quer gestellt werden muss.

In einer Ausgestaltung der Erfindung kann die Fahrerassistenzvorrichtung durch einen Lenkeinschlag über einen bestimmten Mindesteinschlagwinkel hinaus und/oder durch das Unterschreiten einer Mindestfahrgeschwindigkeit des Flurförderzeugs und/oder durch das Betätigen einer Hydraulikfunktion des Flurförderzeugs eingeschaltet werden.

Wenn die Fahrerassistenzvorrichtung automatisch angeschaltet wird, führt dies nicht zu Irritationen im normalen Fahrbetrieb. Dabei kann ein Einschalten erfolgen, wenn beispielsweise ein gewisser Mindesteinschlagwinkel überschritten wird, etwa wenn es zu einem sehr starken Lenkeinschlag kommt. Dies ist zumeist der Fall, wenn innerhalb einer Regalgasse ein Flurförderzeug auf kleinstem Raum quer gestellt werden muss bzw. wenn beim Rangieren eine Lagerposition angefahren wird. Dabei ist es auch möglich, durch die Richtung des Lenkeinschlags festzulegen, auf welcher Seite des Flurförderzeugs die Positionsmarkierung projiziert werden soll. Alternativ oder zugleich kann auch ein Einschalten erfolgen, wenn eine Mindestfahrgeschwindigkeit unterschritten wird, wie es beispielsweise nach dem Anfahren der Lagerungsposition beim Abbremsen in einer Regalgasse der Fall ist. Da für die Aufnahme oder das Absetzen einer Last die Lasthandhabungsvorrichtung betätigt werden muss, beispielsweise indem eine Höhe eingestellt wird, kann auch durch die Betätigung einer Hydraulikfunktion die Fahrerassistenzvorrichtung sinnvoll automatisiert eingeschaltet werden.

Die Fahrerassistenzvorrichtung kann durch einen Schalter eingeschaltet werden.

Dadurch kann erreicht werden, dass die Fahrerassistenzvorrichtung nicht im Dauerbetrieb arbeitet und irritiert oder als unangenehm empfunden wird.

Vorteilhaft ist die Lasthandhabungsvorrichtung eine Lastgabel.

Vor allem bei der Aufnahme von Transportpaletten durch die Gabelzinken einer Lastgabel ist die genaue Ausrichtung sehr wichtig und die erfindungsgemäße Fahrerassistenzvorrichtung bzw. ein mit dieser versehenes Flurförderzeug besonders vorteilhaft.

Die Erfindung ist jedoch ebenfalls anwendbar bei anderen, an einem Hubmast angebauten Lasthandhabungsvorrichtungen, beispielsweise einer Ballenklammer, Rollenklammer oder einem Greifer.

In einer günstigen Ausgestaltung der Erfindung weist das Flurförderzeug ein Fahrerschutzdach und die Fahrassistenzvorrichtung eine im oberen Bereich des Fahrerschutzdaches angeordnete Lichtquelle für den Lichteffekt auf.

Das Fahrerschutzdach bietet eine hoch angeordnete Position, die die Darstellung der Positionsmarkierung auf der Fahrbahn erleichtert.

Das Flurförderzeug kann einen Hubmast aufweisen und die Fahrassistenzvorrichtung eine im oberen Bereich des Hubmastes angeordnete Lichtquelle für den Lichteffekt.

Vor allem bei Flurförderzeugen, die keinen neigbaren Hubmast aufweisen, ist eine solche Anordnung vorteilhaft und bietet eine Möglichkeit für eine hohe Anordnung der Fahrerassistenzvorrichtung. Dies kann beispielsweise bei Hochhub-Gabelhubwagen, Schubmaststaplern, Kommissionierern, insbesondere Horizontalkommissionierern oder Vertikalkommissionierern, und Regalstaplern der Fall sein.

Die Aufgabe wird auch gelöst durch ein System aus einem Regallager und mindestens einem zuvor beschriebenen Flurförderzeug, bei dem die Lasthandhabungsvorrichtung an einem Mast geführt ist, wobei auf der Fahrbahn vor dem Regallager Markierungen zur Ausrichtung der Positionsmarkierung für auf oberen Regalfächern angeordnete Lagerplätze angebracht sind.

Durch solche festen Markierungen auf dem Boden, die beispielsweise Farbmarkierungen sein können, kann das Anfahren einer Lagerposition in einem höheren Regalfach erleichtert werden. Indem die Markierungsposition mit einer solchen Markierung in Deckung gebracht wird, wird die Lasthandhabungsvorrichtung zugleich auch seitlich ausgerichtet, um durch anschließendes Anheben der Lasthandhabungsvorrichtung in dem höheren Regalfach eine darüber angeordnete Lagerposition anzufahren.

Weitere Vorteile und Einzelheiten der Erfindung werden anhand des in den schematischen Figuren dargestellten Ausführungsbeispiels näher erläutert. Hierbei zeigt
- Fig. 1: eine schematische Darstellung eines erfindungsgemäßen Flurförderzeugs mit Fahrerassistenzvorrichtung in Aufsicht und
- Fig. 2: das erfindungsgemäße Flurförderzeug der Fig. 1 in Seitenansicht.

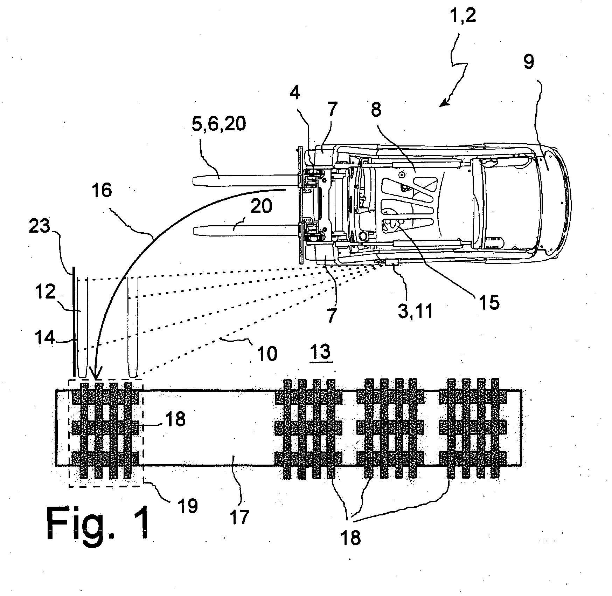

Die Fig. 1 zeigt eine schematische Darstellung eines erfindungsgemäßen Flurförderzeugs 1, hier beispielsweise eines Gegengewichtsgabelstaplers 2, mit einer Fahrerassistenzvorrichtung 3 in Aufsicht. Der Gegengewichtsgabelstapler 2 weist eine an einem Hubmast 4 geführte Lasthandhabungsvorrichtung 5 in Form einer von zwei Gabelzinken gebildeten Lastgabel 6 auf. Der Hubmast 4 ist über einer Vorderachse mit Vorderrädern 7 angeordnet, über die der Gegengewichtsgabelstapler 2 angetrieben wird. Hinter dem Hubmast 4 befindet sich ein Fahrerschutzdach 8 und hinter dem Fahrerschutzdach 8 ein Gegengewicht 9. Unterhalb des Gegengewichts 9 und in der Fig. 1 nicht dargestellt befinden sich gelenkte Hinterräder, mit denen der Gegengewichtsgabelstapler 2 gelenkt wird. Die Fahrerassistenzvorrichtung 3 ist an dem Fahrerschutzdach 8 angeordnet und sendet Laserlicht 10 eines Lasers 11 oder gebündeltes Licht einer Lichtquelle als Lichteffekt aus, durch das eine Positionsmarkierung 12 auf der Fahrbahn 13 markiert wird. Die Positionsmarkierung 12 entspricht einer schematischen Umrisslinie 14 der Lastgabel 6. Wenn der Gegengewichtsgabelstapler 2 aus der dargestellten Position losfährt mit dem gewählten Lenkwinkel der Hinterräder, entsprechend einem Lenkeinschlag eines Lenkrads 15 und einen Viertelkreis durchfährt, entsprechend einem Kurvenbahnwinkel von 90° und einer Drehung der Fahrzeuglängsachse um 90°wie durch den Pfeil 16 angedeutet, so kommt die Lastgabel 6 mit der Positionsmarkierung 12 in Deckung.

In der dargestellten Position des Gegengewichtsgabelstaplers 2 befindet sich neben dem Gegengewichtsgabelstapler 2 ein Lastregal 17, auf dem Paletten 18 abgesetzt sind. Die zu dem momentanen Lenkeinschlag des Lenkrads 15 dargestellte Positionsmarkierung 12 ist in der Darstellung vor einer Palette 18, entsprechend einer Lagerposition 19 angeordnet. Für den Fahrer des Gegengewichtsgabelstapler 2, der parallel zu dem Lastregal 17 an die Lagerposition 19 herangefahren ist, wird somit erkennbar, ob mit dem momentanen Lenkeinschlag des Lenkrads 15 der Gegengewichtsgabelstapler 2 nach dem Durchfahren eines Viertelkreises sich in der richtigen Position gegenüber der Palette 18 an der Lagerposition 19 befinden würde, um die Gabelzinken 20 der Lastgabel 6 in die entsprechenden Öffnungen der Palette 18 einführen zu können. Um die Ausrichtung zu korrigieren, kann der Fahrer den Gegengewichtsgabelstapler 2 mit dem Fahrantrieb parallel zu dem Lastregal 17 bewegen. Zusätzlich oder alternativ kann die Positionsmarkierung 12 durch Verändern des Lenkeinschlags an dem Lenkrad 15 verschoben werden, bis die Ausrichtung mit der Lagerposition 19 und den zugehörigen Palette 18 korrekt ist.

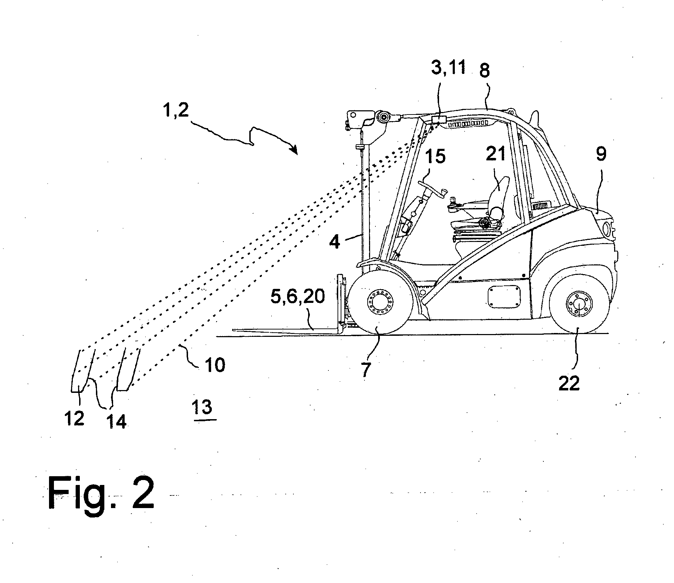

Die Fig. 2 zeigt den Gegengewichtsgabelstapler 2 als erfindungsgemäßes Flurförderzeug der Fig. 1 in Seitenansicht. An dem Fahrerschutzdach 8 ist die Fahrerassistenzvorrichtung 3 an der Oberseite seitlich befestigt. Die Lastaufnahmevorrichtung 5 in Form der Lastgabel 6 ist an dem Hubmast 4 geführt, der sich oberhalb der angetriebenen Vorderräder 7 befindet. Unterhalb des Fahrerschutzdaches 8 ist ein Fahrersitz 21 mit dem Lenkrad 15 angeordnet. Unterhalb des Gegengewichts 9 sind gelenkte Hinterräder 22 angeordnet. Der Laser 11 der Fahrerassistenzvorrichtung 3 sendet Laserlicht 10 aus, durch das auf der Fahrbahn 13 die Positionsmarkierung 12 im vorliegenden Beispiel als schematische Umrisslinie 14 markiert wird.

Eine auf der Fahrbahn 13 aufgebrachte Markierung 23, im vorliegenden Fall eine Balkenmarkierung für die rechte Seite der Positionsmarkierung 12, ermöglicht es, die Lastgabel 6 für eine Lagerposition auf einem oberen Regalfach zunächst auszurichten und nach dem Anfahren und Anheben der Lastgabel 6 eine Palette 18 aufzunehmen.

Sobald der Gegengewichtsgabelstapler 2 unter eine Mindestgeschwindigkeit abgebremst wird und nachfolgend das Lenkrad 15 über einen festgelegten Mindestwinkel hinaus aus der Geradeausstellung eingeschlagen wird, wird der Laser 11 der Fahrerassistenzvorrichtung 3 automatisch für die Dauer des Lenkeinschlags angeschaltet und die Positionsmarkierung 12 zu dem momentanen Lenkeinschlagswinkel auf der Seite des Gegengewichtsgabelstapler 2 angezeigt, zu der hin durch den Lenkeinschlag gelenkt wird. Dadurch ist für den Fahrer schnell und intuitiv zu jedem Zeitpunkt erfassbar, wohin sich bei einer Weiterfahrt die Lastgabel 6 bewegt und in welcher Ausrichtung gegenüber der Lagerposition 19 diese nach dem Viertelkreis zum Stehen kommt. Dabei kann der Einschlagswinkel der gelenkten Hinterräder 21 oder des Lenkrads 15 durch alle nach dem Stand der Technik bekannten Verfahren, insbesondere durch Sensoren, festgestellt werden und der Fahrerassistenzvorrichtung 3 zugeführt werden. Die hoch gelegene Anordnung der Fahrerassistenzvorrichtung 3 an dem Fahrerschutzdach 8 ermöglicht eine exakte und gute Darstellung der Positionsmarkierung 12.

Die Erfindung ist nicht auf das hier geschilderte Beispiel eines Gegengewichtsgabelstaplers 2 als Flurförderzeug 1 beschränkt und kann bei allen Arten von Flurförderzeugen angewandt werden, bei denen bei Erreichen einer Lagerposition ein Lastaufnahmemittel durch Kurvenfahrt ausgerichtet werden muss.

## Patentansprüche

1. Fahrerassistenzvorrichtung für ein eine Lasthandhabungsvorrichtung (5) aufweisendes Flurförderzeug (1), die an dem Flurförderzeug (1) angeordnet einen Lichteffekt auf die Fahrbahn (13) projizieren kann,
**dadurch gekennzeichnet,**
**dass** der Lichteffekt eine Positionsmarkierung (12) der Lasthandhabungsvorrichtung (5) auf der Fahrbahn (13) zu einem Lenkeinschlag markieren kann, die von der Lasthandhabungsvorrichtung (5) nach einer Kurvenfahrt des Flurförderzeugs (1) um einen festgelegten Kurvenbahnwinkel erreicht wird.

2. Fahrerassistenzvorrichtung nach Anspruch 1,
**dadurch gekennzeichnet,**
**dass** der Lichteffekt aus einer die Orientierung der Lasthandhabungsvorrichtung (5) wiedergebenden Positionsmarkierung (12) besteht.

3. Fahrerassistenzvorrichtung nach Anspruch 2,
**dadurch gekennzeichnet,**
**dass** die Positionsmarkierung (12) eine schematische Umrisslinie (14) der Lasthandhabungsvorrichtung (5) wiedergibt.

4. Fahrerassistenzvorrichtung nach einem der Ansprüche 1 bis 3,
**dadurch gekennzeichnet,**
**dass** der Lichteffekt durch einen Laser (11) erzeugt wird.

5. Flurförderzeug mit einer Lasthandhabungsvorrichtung (5) und einer Fahrerassistenzvorrichtung (3) nach einem der Ansprüche 1 bis 4,
**dadurch gekennzeichnet,**
**dass** der Lichteffekt eine Positionsmarkierung (12) der Lasthandhabungsvorrichtung (5) auf der Fahrbahn (13) zu einem Lenkeinschlag markieren kann, die von der Lasthandhabungsvorrichtung (5) nach einer Kurvenfahrt des Flurförderzeugs (1) um einen festgelegten Kurvenbahnwinkel erreicht wird.

6. Flurförderzeug nach Anspruch 5,
**dadurch gekennzeichnet,**
**dass** die Positionsmarkierung (12) für den maximalen Lenkeinschlag angezeigt werden kann.

7. Flurförderzeug nach Anspruch 5 oder 6,
**dadurch gekennzeichnet,**
**dass** die Positionsmarkierung (12) für den momentanen Lenkeinschlag angezeigt werden kann.

8. Flurförderzeug nach einem der Ansprüche 5 bis 7,
**dadurch gekennzeichnet,**
**dass** der festgelegten Kurvenbahnwinkel 90 ° beträgt.

9. Flurförderzeug nach einem der Ansprüche 5 bis 8,
**dadurch gekennzeichnet,**
**dass** die Fahrerassistenzvorrichtung (3) durch einen Lenkeinschlag über einen bestimmten Mindesteinschlagwinkel hinaus und/oder durch das Unterschreiten einer Mindestfahrgeschwindigkeit des Flurförderzeugs (1) und/oder durch das Betätigen einer Hydraulikfunktion des Flurförderzeugs (1) eingeschaltet werden kann.

10. Flurförderzeug nach einem der Ansprüche 5 bis 9,
**dadurch gekennzeichnet,**
**dass** die Fahrerassistenzvorrichtung (3) durch einen Schalter eingeschaltet werden kann.

11. Flurförderzeug nach einem der Ansprüche 5 bis 10,
**dadurch gekennzeichnet,**
**dass** die Lasthandhabungsvorrichtung (5) eine Lastgabel (6) ist.

12. Flurförderzeug nach einem der Ansprüche 5 bis 11,
**dadurch gekennzeichnet,**
**dass** das Flurförderzeug (1) ein Fahrerschutzdach (8) aufweist und die Fahrassistenzvorrichtung (3) eine im oberen Bereich des Fahrerschutzdaches (8) angeordnete Lichtquelle für den Lichteffekt aufweist.

13. Flurförderzeug nach einem der Ansprüche 5 bis 12,
**dadurch gekennzeichnet,**
**dass** das Flurförderzeug (1) einen Hubmast (4) aufweist und die Fahrassistenzvorrichtung eine im oberen Bereich des Hubmastes (4) angeordnete Lichtquelle für den Lichteffekt aufweist.

14. System aus einem Regallager (17) und mindestens einem Flurförderzeug (1) nach einem der Ansprüche 5 bis 13, bei dem die Lasthandhabungsvorrichtung (5) an einem Hubmast (4) geführt ist,
**dadurch gekennzeichnet,**
**dass** auf der Fahrbahn (13) vor dem Regallager Markierungen (23) zur Ausrichtung der Positionsmarkierung (12) für auf oberen Regalfächern angeordnete Lagerplätze angebracht sind.

## Claims

1. Driver assistance device for an industrial truck (1) which has a load handling device (5), which, when arranged on the industrial truck (1), can project a light effect onto the carriageway (13),
**characterized**
**in that** the light effect can form a position marker (12) of the load handling device (5) on the carriageway (13) for a steering lock, which position marker (12) is reached by the load handling device (5) after cornering of the industrial truck (1) by a defined trajectory angle.

2. Driver assistance device according to Claim 1,
**characterized**
**in that** the light effect is composed of a position marker (12) which represents the orientation of the load handling device (5).

3. Driver assistance device according to Claim 2,
**characterized**
**in that** the position marker (12) represents a schematic outline (14) of the load handling device (5).

4. Driver assistance device according to one of Claims 1 to 3,
**characterized**
**in that** the light effect is generated by a laser (11).

5. Industrial truck having a load handling device (5) and a driver assistance device (3) according to one of Claims 1 to 4,
**characterized**
**in that** the light effect can form a position marker (12) of the load handling device (5) on the carriageway (13) for a steering lock, which position marker (12) is reached by the load handling device (5) after cornering of the industrial truck (1) by a defined trajectory angle.

6. Industrial truck according to Claim 5,
**characterized**
**in that** the position marker (12) can be displayed for the maximum steering lock.

7. Industrial truck according to Claim 5 or 6,
**characterized**
**in that** the position marker (12) can be displayed for the instantaneous steering lock.

8. Industrial truck according to one of Claims 5 to 7.
**characterized**
**in that** the defined trajectory angle is 90°.

9. Industrial truck according to one of Claims 5 to 8,
**characterized**
**in that** the driver assistance device (3) can be switched on by a steering lock beyond a specific minimum steering lock angle and/or by the undershooting of a minimum velocity of the industrial truck (1) and/or by the activation of a hydraulic function of the industrial truck (1).

10. Industrial truck according to one of Claims 5 to 9,
**characterized in that** the driver assistance device (3) can be switched on by a switch.

11. Industrial truck according to one of Claims 5 to 10,
**characterized**
**in that** the load handling device (5) is a load-lifting fork (6).

12. Industrial truck according to one of Claims 5 to 11,
**characterized**
**in that** the industrial truck (1) has a driver protection roof (8), and the driver assistance device (3) has a light source, arranged in the upper region of the driver protection roof (8), for the light effect.

13. Industrial truck according to one of Claims 5 to 12,
**characterized**
**in that** the industrial truck (1) has a lifting mast (4), and the driver assistance device has a light source, arranged in the upper region of the lifting mast (4), for the light effect.

14. System composed of a high-bay store (17) and at least one industrial truck (1) according to one of Claims 5 to 13, in which the load handling device (5) is guided on a lifting mast (4),
**characterized**
**in that** markers (23) for the orientation of the position marker (12) for storage locations arranged in upper storage bays are provided on the carriageway (13) in front of the high-bay store.

## Revendications

1. Dispositif d'assistance à la conduite pour un chariot de manutention (1) comportant un dispositif de manutention de charge (5), disposé au niveau du chariot de manutention (1) et pouvant projeter un effet lumineux sur la voie de circulation (13), **caractérisé en ce que** l'effet lumineux peut marquer un marquage de position (12) du dispositif de manutention de charge (5) sur la voie de circulation (13) par rapport à un braquage atteint par le dispositif de manutention de charge (5) après une conduite en virage du chariot de manutention (1) selon un angle de voie de circulation déterminé.

2. Dispositif d'assistance à la conduite selon la revendication 1, **caractérisé en ce que** l'effet lumineux se compose d'un marquage de position (12) reproduisant l'orientation du dispositif de manutention de charge (5).

3. Dispositif d'assistance à la conduite selon la revendication 2, **caractérisé en ce que** le marquage de position (12) reproduit une ligne de contour (14) schématique du dispositif de manutention de charge (5).

4. Dispositif d'assistance à la conduite selon l'une quelconque des revendications 1 à 3, **caractérisé en ce que** l'effet lumineux est produit par un laser (11) .

5. Chariot de manutention avec un dispositif de manutention de charge (5) et un dispositif d'assistance à la conduite (3) selon l'une quelconque des revendications 1 à 4, **caractérisé en ce que** l'effet lumineux peut marquer un marquage de position (12) du dispositif de manutention de charge (5) sur la voie de circulation (13) par rapport à un braquage atteint par le dispositif de manutention de charge (5) après une conduite en virage du chariot de manutention (1) selon un angle de voie de circulation déterminé.

6. Chariot de manutention selon la revendication 5, **caractérisé en ce que** le marquage de position (12) peut afficher le braquage maximal.

7. Chariot de manutention selon la revendication 5 ou 6, **caractérisé en ce que** le marquage de position (12) peut afficher le braquage momentané.

8. Chariot de manutention selon l'une quelconque des revendications 5 à 7, **caractérisé en ce que** l'angle de voie de circulation déterminé est de 90°.

9. Chariot de manutention selon l'une quelconque des revendications 5 à 8, **caractérisé en ce que** le dispositif d'assistance à la conduite (3) peut être enclenché par un braquage dépassant un angle de braquage minimal déterminé et/ou par le passage en dessous d'une vitesse de conduite minimale du chariot de manutention (1) et/ou par l'actionnement d'une fonction hydraulique du chariot de manutention (1).

10. Chariot de manutention selon l'une quelconque des revendications 5 à 9, **caractérisé en ce que** le dispositif d'assistance à la conduite (3) peut être enclenché par un contacteur.

11. Chariot de manutention selon l'une quelconque des revendications 5 à 10, **caractérisé en ce que** le dispositif de manutention de charge (5) est une fourche de chargement (6).

12. Chariot de manutention selon l'une quelconque des revendications 5 à 11, **caractérisé en ce que** le chariot de manutention (1) comporte un toit de protection du conducteur (8) et que le dispositif d'assistance à la conduite (3) comporte une source lumineuse disposée dans la zone supérieure du toit de protection du conducteur (8) pour l'effet lumineux.

13. Chariot de manutention selon l'une quelconque des revendications 5 à 12, **caractérisé en ce que** le chariot de manutention (1) comporte un mât de levée (4) et que le dispositif d'assistance à la conduite comporte une source lumineuse disposée dans la zone supérieure du mât de levée (4) pour l'effet lumineux.

14. Système composé d'un rayonnage (17) et d'au moins un chariot de manutention (1) selon l'une quelconque des revendications 5 à 13, dans lequel le dispositif de manutention de charge (5) est guidé au niveau d'un mât de levée (4), **caractérisé en ce que** des marquages (23) sont placés sur la voie de circulation (13) avant le rayonnage pour orienter le marquage de position (12) prévu pour les étagères supérieures.
